# EUROPEAN PATENT SPECIFICATION

(11) **EP 2 052 971 B1**
(45) Date of publication and mention of the grant of the patent: **06.03.2013**
(21) Application number: 08166977.2
(22) Date of filing: 17.10.2008
(51) Int. Cl.: B64G 1/28

(54) **Rotor assemblies having shafts with integral bearing raceways**
Rotoranordnungen mit Wellen mit integrierten Lagerlaufbahnen
Ensembles de rotos dotés d'axes avec des chemins de roulements intégrés

(30) Priority: 23.10.2007 US 877409
(43) Date of publication of application: 29.04.2009
(73) Proprietor: Honeywell International Inc., Morristown, NJ 07962 (US)
(72) Inventor: Winkel, Robert E., Phoenix, AZ 85014 (US); Hanks, James T., Peoria, AZ 85382 (US); Gisler, Gary L., Morristown, NJ 07962-2245 (US); Smith, Dennis W., Phoenix, AZ 85032 (US)
(74) Representative: Buckley, Guy Julian

(56) References cited:
- EP-A- 0 289 898
- FR-A- 2 130 639
- FR-A- 2 858 294

## Description

### TECHNICAL FIELD

The present invention generally relates to control moment gyroscopes, and more particularly relates to rotor assemblies having shafts with integral bearing raceways.

### BACKGROUND

Momentum control devices with rotor assemblies are commonly used in spacecraft and other vehicles. Such devices utilize rotating inertia structures to provide a torque on the vehicle for attitude control and other purposes. Examples of momentum control devices include control moment gyroscopes and reaction wheels.

Control moment gyroscopes (CMGs), see FR 2 130 639, are commonly used to provide attitude and momentum control for a variety of vehicles, including spacecraft and satellites. CMGs typically include a rotor assembly spun by a motor about its rotor axis at a known rate. In order to induce a torque on the vehicle, the spinning rotor is gimbaled by an inner gimbal assembly about a gimbal axis. The rotor assembly has a mass and a spin rate such that any movement of the rotor assembly out of its plane of rotation will induce a torque around an output axis that is both normal to the rotor axis and the gimbal axis. The CMG is typically mounted within the vehicle with a bearing assembly such that the induced torque transfers to the vehicle, thereby causing the vehicle to move in a controlled manner.

Similar to CMGs, reaction wheel assemblies (RWAs) are also commonly used to provide attitude and momentum control for a variety of vehicles. RWAs typically include a rotor, bearings, and a motor coupled to the vehicle structure. The motor provides the ability to vary the wheel speed of the rotor. As the rotor speed is varied, a momentum exchange occurs, and the motor provides a torque on the vehicle about the spin axis. In most applications, multiple RWAs are used in an array such that the spin axes of the rotors span three dimensions for three axis control. Arranging the multiple reaction wheels in this way allows the array to apply torque to the vehicle along different axes, generally all three. Torque can be selectively applied to these axes to provide attitude control of the vehicle.

While traditional momentum control devices such as RWAs and CMGs are generally effective, engineers are continually attempting to design more robust and efficient momentum control devices. In some devices, drag in the bearing assembly may be a source of inefficiency. Although it is known that smaller bearings reduce the amount of drag on the rotor assembly, the correspondingly smaller end portions of the shaft associated with the smaller bearings may be weaker and more subject to reliability issues than larger shaft end portions. Conventional bearings are typically used with a bearing inner ring positioned over the end of the rotor shaft and an opposing bearing outer ring positioned on the housing. These bearing rings have raceways formed therein to receive the ball bearings that enable rotation. Generally, the bearing rings on the shaft are provided because the material utilized to manufacture the shaft is not strong enough to withstand high loads or repeated load cycling to which the bearing is subjected To receive and accommodate the bearing ring, however, the shaft is typically narrowed. The narrower shaft may disadvantageously result in decreased reliability of the momentum control device.

Accordingly, it is desirable to provide rotor assemblies for momentum control devices with bearing assemblies that enable a more robust and efficient operation. Furthermore, other desirable features and characteristics of the present invention will become apparent from the subsequent detailed description of the invention and the appended claims, taken in conjunction with the accompanying drawings and this background of the invention.

### BRIEF SUMMARY

The present invention provides a gyroscope as defined in claim 1.

The gyroscope may include the features of any one or more of dependent claims 2 to 8.

In accordance with one exemplary embodiment, a rotor assembly includes a rotor assembly housing, a shaft, a bearing assembly coupling the shaft to the rotor assembly housing, and a mass structure coupled to and rotatable with the shaft. The bearing assembly includes a bearing housing, a first raceway defined in the bearing housing, a second raceway defined in the shaft, and a plurality of ball bearings positioned within the first and second raceways to enable the shaft to rotate relative to the rotor assembly housing.

In accordance with another exemplary embodiment, a rotor assembly includes a rotor assembly housing, a shaft having a first end and a second end, a bearing assembly coupling the first and second ends of the shaft to the rotor assembly housing, and a mass structure coupled to and rotatable with the shaft. The bearing assembly includes a bearing housing, first raceways defined in the bearing housing, second raceways defined in the first and second ends of the shaft, and a plurality of ball bearings positioned within the first and second raceways to enable the shaft to rotate relative to the rotor assembly housing.

In accordance with yet another exemplary embodiment, a momentum control device includes a rotor assembly and a motor for rotating the shaft and mass structure. The rotor assembly includes a rotor assembly housing, a shaft, a bearing assembly coupling the shaft to the rotor assembly housing, and a mass structure coupled to and rotatable with the shaft. The bearing assembly includes a bearing housing, a first raceway defined in the bearing housing, a second raceway defined in the shaft, and a plurality of ball bearings positioned within the first and second raceways to enable the shaft to rotate relative to the rotor assembly housing.

### BRIEF DESCRIPTION OF THE DRAWINGS

The present invention will hereinafter be described in conjunction with the following drawing figures, wherein like numerals denote like elements, and wherein:

FIG. 1 is a cross-sectional view of an inner gimbal assembly (IGA)of a control moment gyroscope (CMG) in accordance with an exemplary embodiment; and

FIGS. 2-9 are cross-sectional views of rotor assemblies in accordance with exemplary embodiments.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

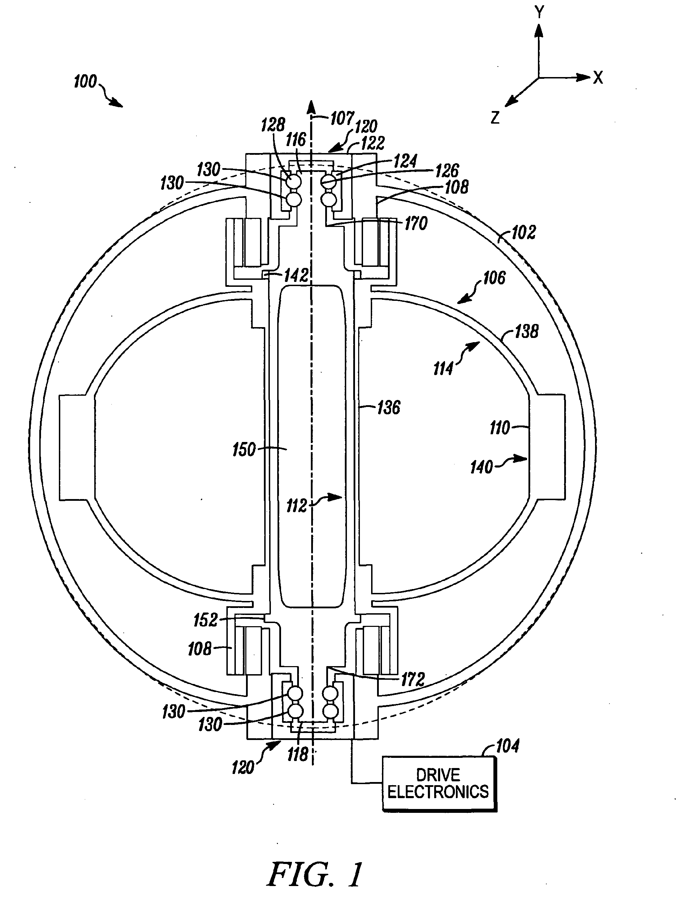

FIG. 1 is a cross-sectional view of an inner gimbal assembly (IGA) 100 of a control moment gyroscope (CMG) in accordance with an exemplary embodiment. The CMG can be mounted on a spacecraft, such as an orbiting satellite, to control the attitude or positioning of the spacecraft. Although FIG. 1 shows an exemplary embodiment implemented as a CMG, aspects of the exemplary embodiments discussed herein can be incorporated into any type of rotor assembly system, such as a reaction wheel assembly (RWA), and/or incorporated into any type of machine. Some of the components of the CMG are known in the art and may be assembled in various ways using different processors, software, controllers, sensors, and the like. Additionally, various functionalities that are typically provided by one part of the CMG can instead be provided by another part. The IGA 100 as shown in FIG. 1 includes parts that are pertinent to the discussion of exemplary embodiments, and the CMG may include other elements or systems that might be provided in such a CMG and which are well known and not shown in FIG. 1.

The IGA 100 includes a rotor assembly 106, a housing 102, a motor 108, and a drive electronics 104. The drive electronics 104 is coupled to the housing 102, motor 108, and/or the rotor assembly 106, either directly or through intermediate devices. As described in further detail below, during operation, the rotor assembly 106 is spun within the housing 102 about a longitudinal axis 107 (or y-axis in FIG. 1) by the motor 108 based on signals from the drive electronics 104. To produce a desired vehicle maneuver, the rotor assembly 106 can be gimbaled about an x or z axis based on signals from the drive electronics 104 to generate a torque around an output axis that is both normal to the rotor axis and the gimbal axis. This torque is transferred to the vehicle, thereby causing the vehicle to move in a controlled manner.

The rotor assembly 106 includes an inertial mass structure 140 coupled to a shaft 112. In this embodiment, the shaft 112 is a generally cylindrical structure with first and second ends 116 and 118 and a hollow central portion 150. Each of the first and second ends 116, 118 is coupled to the rotor housing 106 and motor 108 with a bearing assembly 120. The bearing assembly 120 includes a bearing housing 122 and bearing outer rings 124 secured to an interior surface of the bearing housing 122. The bearing outer rings 124 have at least one outer ring raceway 130 formed therein. In alternate embodiment, the bearing outer rings 124 can be omitted and the raceways 130 can be formed directly in the bearing housing 122. In this embodiment, there are two outer ring raceways 130 adjacent the first end 116 of the shaft 112 and two outer ring raceways 130 adjacent the second end 118 of the shaft 112. Each of the first and second ends 116, 118 of the shaft 112 have shaft raceways 126 formed therein that oppose and correspond to the outer ring raceways 130 of the bearing outer rings 124. Generally, the shaft raceways 126 are machined directly into the shaft 112. The shaft raceways 126 and outer ring raceways 130 accommodate a plurality of rolling elements 128 that enable the shaft 112 to rotate relative the bearing housing 122.

The integral shaft raceways 126 of the bearing assembly 120 enable thicker first and second ends 116, 118 than most prior art embodiments because additional rings positioned on the shaft 112 are not necessary. The thicker first and second ends 116, 118 provide a stronger, more rugged shaft 112, particularly at transitions 170, 172 respectively between the first and second ends 116, 118 and the remainder of the shaft 112. This can enable a more durable and efficient IGA 100 and/or CMG. In conventional IGAs, the transitions between the shaft ends and the central portion of the shaft can be the weakest portions of the shaft because they are the thinnest portions that are subject to the greatest moment stresses. However, in this exemplary embodiment, the shaft raceways 126 themselves are the thinnest portions of the shaft 112, but their position on the shaft 112 nevertheless results in lower localized stresses.

The inertial mass structure 140 shown in FIG. 1 includes a mass 110 and a support structure 114. The mass 110 is generally toroidal and/or ring shaped and surrounds the shaft 112, although other shapes and configurations can be provided. In this embodiment, the support structure 114 has an inner shell 136 and an outer shell 138 that circumscribes the inner shell 136. The inner shell 136 is generally cylindrical and has sides that are parallel to the shaft 112. The outer shell 138 has generally curved sides that are coupled to the mass 110. In this embodiment, the inertial mass assembly 140 is secured to the shaft 112 by a securement 142, such as a weld, screw or clamp, adjacent the first end 116, and a flange 152 formed in the shaft 112 adjacent the second end 118. As discussed in further detail below, alternate couplings between the inertial mass assembly 140 and the shaft 112 can be provided. The inertial mass structure 140 is coupled to the motor 108 such that the rotor assembly 106 can receive the force necessary to rotate.

The inertial mass structure 140 can be made of high strength steels, like Maraging steels, or precipitation hardening stainless steels. Other metals, like Titanium alloys or metal matrix composites can also be used, along with non metallic materials, like fiber composites. The bearing assembly 120 can be made of steel, and powder metal materials can also be used. Similarly, the shaft 112 can be made of the same materials as the bearing assembly 120. The dimensions of the bearing assembly 120, inertial mass structure 140, and shaft 112 can be any suitable dimension for a desired application.

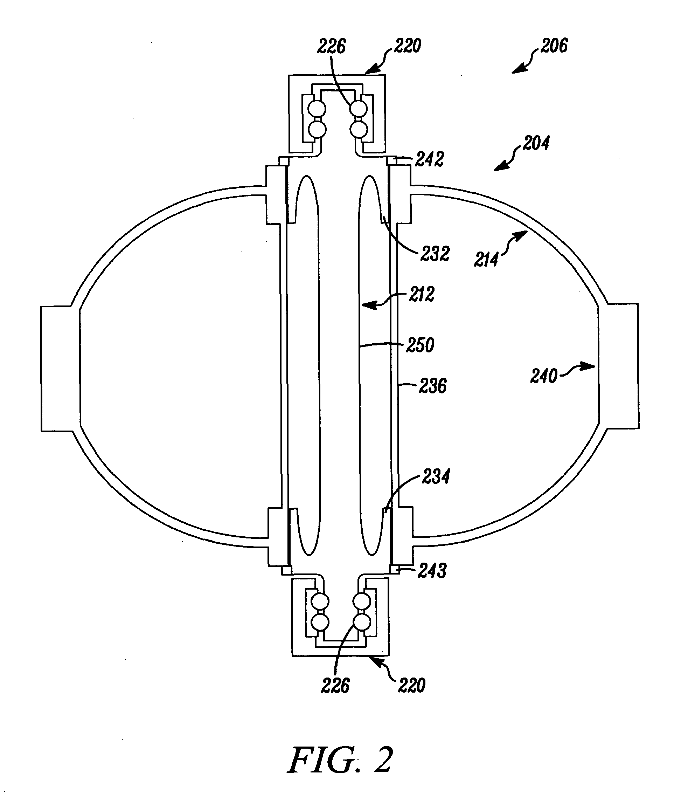

FIG. 2 is a cross-sectional view of a rotor assembly 206 in accordance with alternate exemplary embodiment. Rotor assembly 206 includes a shaft 212 coupled to a mass structure 240. In contrast to the exemplary embodiment shown in FIG. 1, the shaft 212 has a relatively narrow, central portion 250 and two flanges 232, 234 for coupling the shaft 212 to the mass structure 240. Securements 242, 243, such as welds, screws, or clamps, or interference fits, secure the mass structure 240 to the shaft 212. This embodiment further includes a bearing assembly 220 with integral raceways 226 on the ends of the shafts 212.

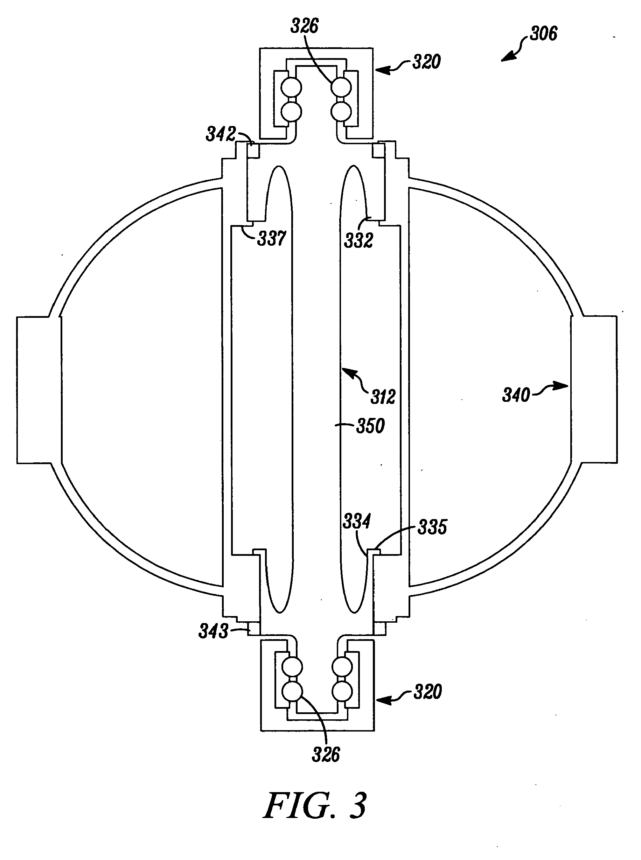

FIG. 3 is a cross-sectional view of a rotor assembly 306 in accordance with alternate exemplary embodiment. As in the embodiment depicted in FIG. 2, the rotor assembly 306 includes a shaft 312 with a relatively narrow central portion 350 and two flanges 332, 334 coupled to a mass structure 340. The second flange 334 includes an extended portion 335 the locks the mass structure 340 relative to the shaft 312. Similarly, the mass structure 340 includes an extended portion 337 that locks the mass structure 340 relative to the shaft 312. Securements 342, 343, such as welds, screws, or clamps, additionally secure the mass structure 340 to the shaft 312. This embodiment further includes a bearing assembly 320 with integral raceways 326 on the ends of the shafts 312.

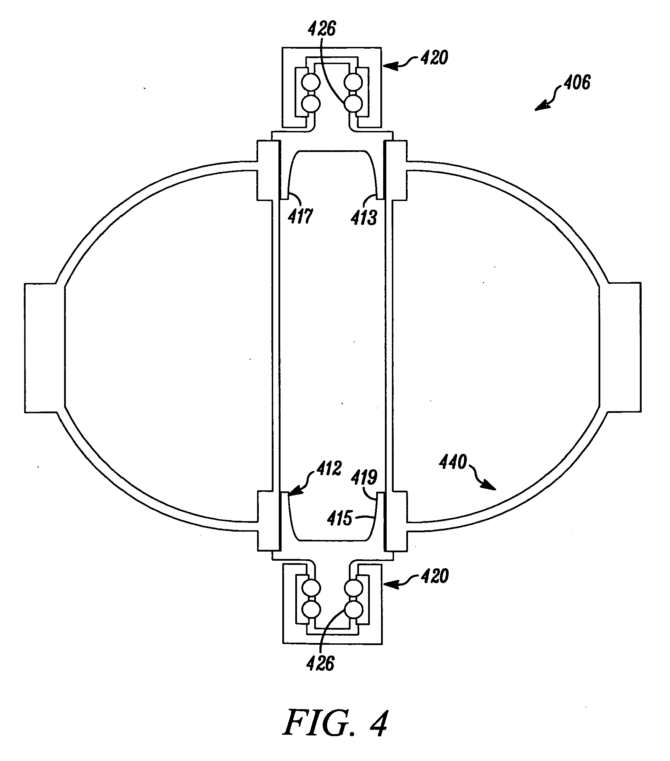

FIG. 4 is a cross-sectional view of a rotor assembly 406 in accordance with another alternate embodiment. In contrast to the embodiments discussed above, the rotor assembly 406 includes a split shaft 412 that has first and second portions 413, 415 separated from one another. The split shaft 412 may have a lower weight than some of the other embodiments. The first and second end portions 413, 415 may include flanges 417, 419 such that a mass structure 440 is secured to the split shaft 412. This embodiment further includes a bearing assembly 420 with integral raceways 426 on the ends of the shafts 412.

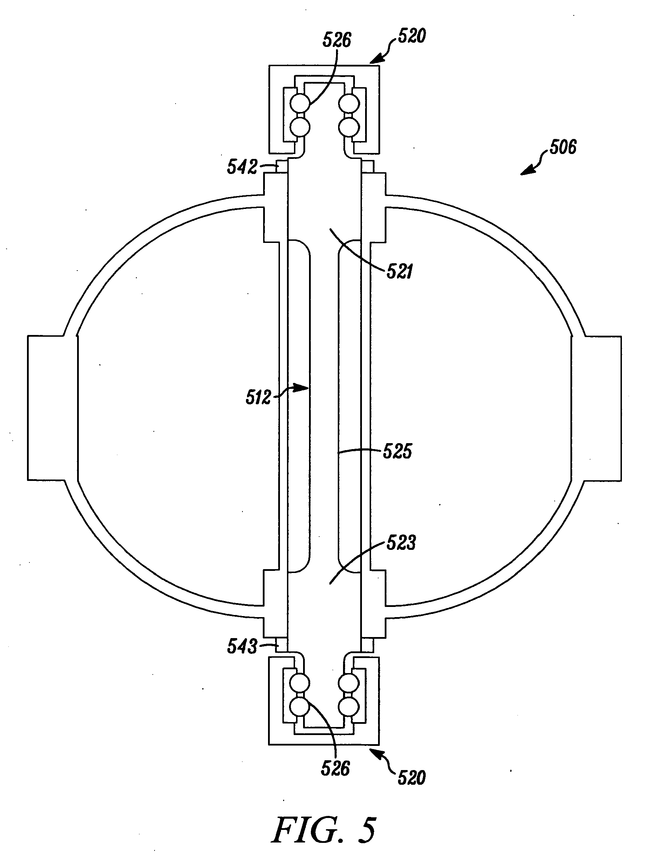

FIG. 5 is a cross-sectional view of a rotor assembly 5056 in accordance with another alternate embodiment. In this embodiment, a shaft 512 includes first and second portions 521, 523 that are relatively thick and a central portion 525 that is relatively thin, particularly in comparison to the first and second portions 521, 523. A mass structure 540 is coupled to the shaft 512 at the first and second portions 521, 523. Securements 542, 543, such as welds, screws, or clamps, secure the mass structure 540 to the shaft 512. This embodiment further includes a bearing assembly 520 with integral raceways 526 on the ends of the shafts 512.

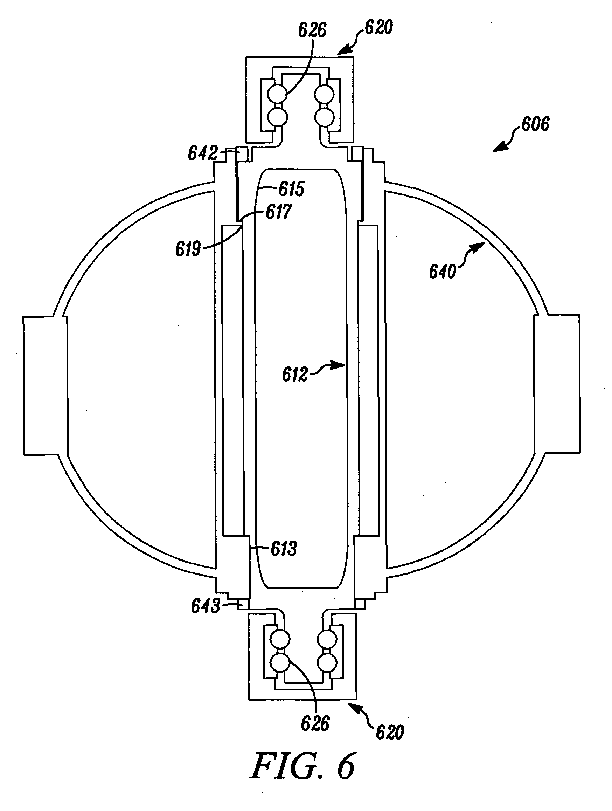

FIG. 6 is a cross-sectional view of a rotor assembly 606 in accordance with another alternate embodiment. This embodiment includes a hollow shaft 612 coupled to a mass structure 640. A first portion 613 of the hollow shaft 612 includes a recess 615 to accommodate the mass structure 640. A second portion 615 of the hollow shaft 612 includes a notch 617 that mates with a flange 619 of the mass structure 640. The recess 615, notch 617, and flange 619 prevent the mass structure 640 from moving relative to the hollow shaft 612. Securements 642, 643, such as welds, screws or clamps, can also be provided to prevent movement. This embodiment further includes a bearing assembly 620 with integral raceways 626 on the ends of the shaft 612.

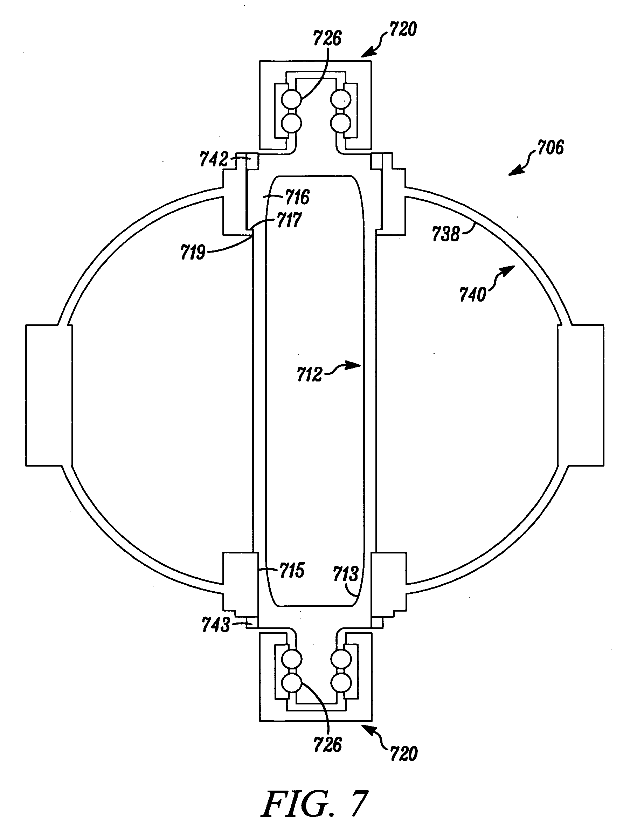

FIG. 7 is a cross-sectional view of a rotor assembly 706 in accordance with another alternate embodiment. This embodiment includes a hollow shaft 712 coupled to a mass structure 740. The mass structure 740 includes an outer shell 738, but no inner shell. A first end 713 of the hollow shaft 712 includes a recess 715 to accommodate the mass structure 740. A second end 716 of the hollow shaft 712 includes a notch 717 that mates with a flange 719 of the mass structure 740. The recess 715, notch 717, and flange 719 prevent the mass structure 740 from moving relative to the hollow shaft 712. Securement 742, 743, such as welds, screws, or clamps, can also be provided to prevent movement. This embodiment further includes a bearing assembly 720 with integral raceways 726 on the ends of the shafts 712.

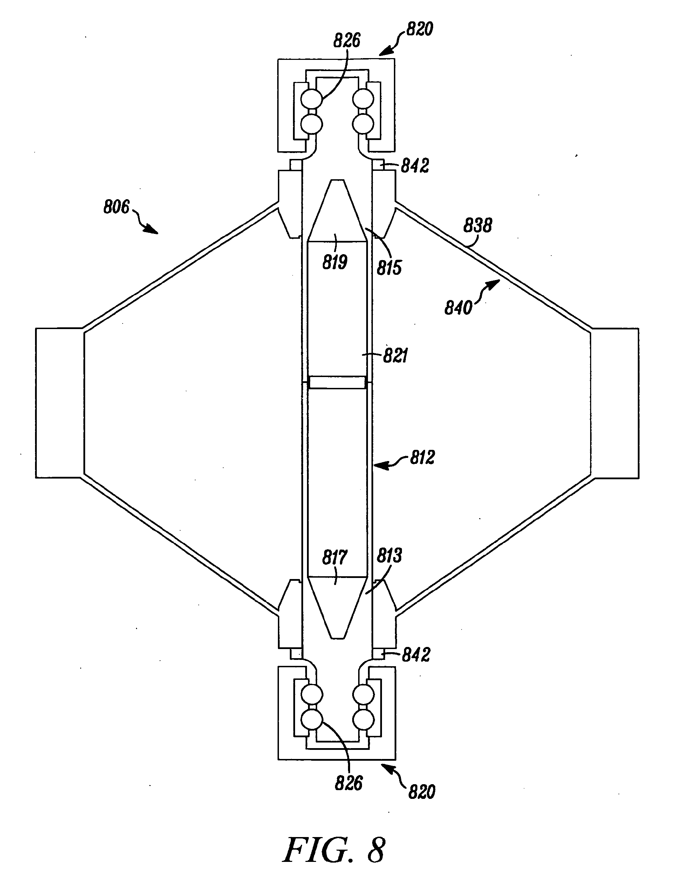

FIG. 8 is a cross-sectional view of a rotor assembly 806 in accordance with another alternate embodiment. In this embodiment, a shaft 812 includes a first end 813 with a generally conical-shaped hollow portion 817 and a second end 815 with a generally conical-shaped hollow portion 819. The shaft 812 also includes a hollow central portion 821 and is coupled to a mass structure 840. The mass structure 840 includes an outer shell 838 with generally straight sides. Securements 842, such as welds, screws or clamps, can be provided to prevent movement. In alternate embodiments, the outer shell 838 can have curved or non-straight sides, and the mass structure 840 may include an inner shell. This embodiment further includes a bearing assembly 820 with integral raceways 826 on the ends of the shafts 812.

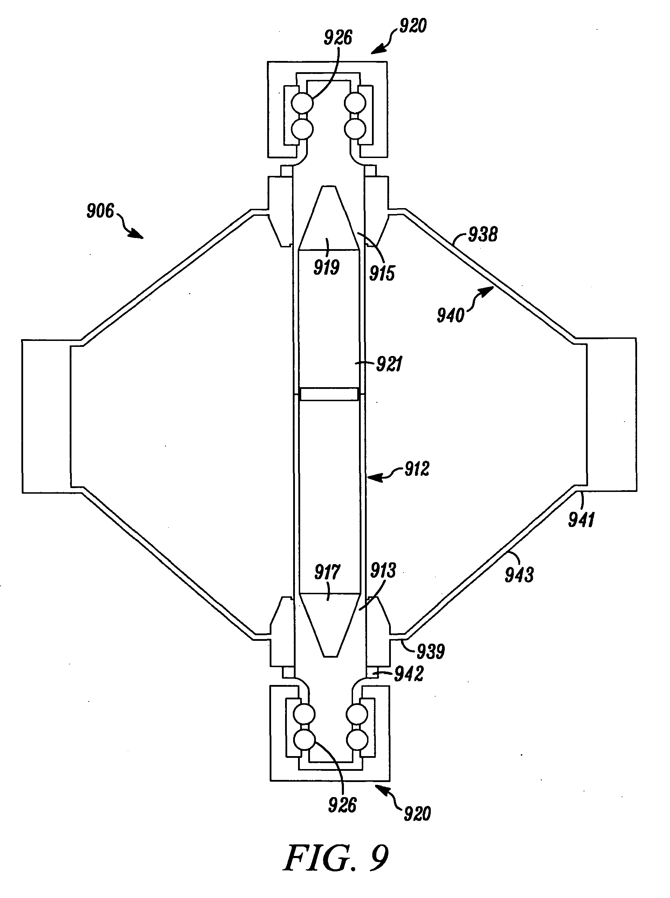

FIG. 9 is a cross-sectional view of a rotor assembly in accordance with another alternate embodiment. In this embodiment, a shaft 912 includes a first end 913 with a generally conical-shaped hollow portion 917 and a second end 915 with a generally conical-shaped hollow portion 919. The shaft 912 also includes a hollow central portion 921. The shaft 912 is coupled to a mass structure 940. The mass structure 940 includes an outer shell 938 having a first and second portions 939, 941 that are generally perpendicular to the shaft 912 and a third portion 943 between the first and second portions 939, 941 that extends at an angle relative to the shaft 912. Securements 942, such as welds, screws or clamps, can be provided to prevent movement. This embodiment further includes a bearing assembly 920 with integral raceways 926 on the ends of the shafts 912.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A control moment gyroscope (106, 206, 306, 406, 506, 606, 706, 806, 906), comprising
a rotor assembly housing (102);
a shaft (112, 212, 312,412, 512, 612, 712, 812, 912) extending along an x-axis;
a bearing assembly (120, 220, 320, 420, 520, 620, 720, 820, 920) coupling the shaft to the rotor assembly housing, the bearing assembly comprising a bearing housing (122), a first raceway (130) defined in the bearing housing, a second raceway (126, 226, 326, 426, 526, 626, 726, 826, 926 defined in the shaft, and a plurality of ball bearings (128) positioned within the first and second raceways to enable the shaft to rotate relative to the rotor assembly housing wherein the shaft comprises first (116) and second (118) ends; and
a mass structure (140, 240, 340, 440, 540, 640, 740, 840, 940) coupled to the shaft adjacent the first and second ends and rotatable with the shaft; **characterised in that** the second raceway is integral with and machined into the shaft.

2. The control moment gyroscope (106, 406, 606, 706, 806, 906) of claim 1, wherein the shaft (112, 412, 612, 712, 812, 912) is at least partially hollow.

3. The control moment gyroscope (206, 306, 506) of claim 1, wherein the shaft (212, 312, 512) has a first portion, a second portion, and a third portion, wherein the third portion (250, 350, 525) is more narrow than and between the first and second portions.

4. The control moment gyroscope (406) of claim 1, wherein the shaft (412) comprises first and second portions (413, 415) separated from one another.

5. The control moment gyroscope (106, 206, 306, 406, 506, 606, 706, 806, 906) of claim 1, wherein the mass structure (140, 240, 340, 440, 540, 640, 740, 840, 940) comprises a mass (110) and a first shell (138, 738, 838, 938) that couples the mass (110) to the shaft (112, 212, 312,412, 512, 612, 712, 812, 912).

6. The control moment gyroscope (106, 206, 306, 406, 506, 606) of claim 5, wherein the first shell (138) is an outer shell and the mass structure (140, 240, 340, 440, 540, 640) further comprises an inner shell (136, 236).

7. The control moment gyroscope (106, 206, 306, 406, 506, 606, 706) of claim 5, wherein the first shell (138, 738) has curved walls.

8. The control moment gyroscope of claim 1, wherein the second raceway is the thinnest portion of the shaft.

## Patentansprüche

1. Steuermoment-Gyroskop (106, 206, 306, 406, 506, 606, 706, 806, 906), das Folgendes umfasst:
ein Rotoranordnungsgehäuse (102);
eine Welle (112, 212, 312, 412, 512, 612, 712, 812, 912), die sich längs einer x-Achse erstreckt,
eine Lageranordnung (120, 220, 320, 420, 520, 620, 720, 820, 920), die die Welle mit dem Rotoranordnungsgehäuse koppelt, wobei die Lageranordnung ein Lagergehäuse (122), eine erste Laufbahn (130), die in dem Lagergehäuse definiert ist, eine zweite Laufbahn (126, 226, 326, 426, 526, 626, 726, 826, 926), die in der Welle definiert ist, und mehrere Kugellager (128), die in der ersten und in der zweiten Laufbahn positioniert sind, um der Welle zu ermöglichen, sich relativ zu dem Rotoranordnungsgehäuse zu drehen, enthält, wobei die Welle ein erstes Ende (116) und ein zweites Ende (118) aufweist; und
eine Massenstruktur (140, 240, 340, 440, 540, 640, 740, 840, 940), die mit der Welle in der Nähe des ersten und des zweiten Endes gekoppelt ist und mit der Welle drehbar ist;
**dadurch gekennzeichnet, dass** die zweite Laufbahn einteilig mit der Welle ausgebildet und in diese eingearbeitet ist.

2. Steuermoment-Gyroskop (106, 406, 606, 706, 806, 906) nach Anspruch 1, wobei die Welle (112, 412, 612, 712, 812, 912) wenigstens teilweise hohl ist.

3. Steuermoment-Gyroskop (206, 306, 506) nach Anspruch 1, wobei die Welle (212, 312, 512) einen ersten Abschnitt, einen zweiten Abschnitt und einen dritten Abschnitt besitzt, wobei der dritte Abschnitt (250, 350, 525) enger als der erste und der zweite Abschnitt ist und sich zwischen diesen befindet.

4. Steuermoment-Gyroskop (406) nach Anspruch 1, wobei die Welle (412) einen ersten und einen zweiten Abschnitt (413, 415), die voneinander getrennt sind, umfasst.

5. Steuermoment-Gyroskop (106, 206, 306, 406, 506, 606, 706, 806, 906) nach Anspruch 1, wobei die Massenstruktur (140, 240, 340, 440, 540, 640, 740, 840, 940) eine Masse (110) und eine erste Schale (138, 738, 838, 938), die die Masse (110) mit der Welle (112, 212, 312, 412, 512, 612, 712, 812, 912) koppelt, umfasst.

6. Steuermoment-Gyroskop (106, 206, 306, 406, 506, 606) nach Anspruch 5, wobei die erste Schale (138) eine äußere Schale ist und die Massenstruktur (140, 240, 340, 440, 540, 640) ferner eine innere Schale (136, 236) umfasst.

7. Steuermoment-Gyroskop (106, 206, 306, 406, 506, 606, 706) nach Anspruch 5, wobei die erste Schale (138, 738) gekrümmte Wände besitzt.

8. Steuermoment-Gyroskop nach Anspruch 1, wobei die zweite Laufbahn der dünnste Abschnitt der Welle ist.

## Revendications

1. Gyrodyne (106, 206, 306, 406, 506, 606, 706, 806, 906), comprenant
un boîtier d'ensemble de rotor (102) ;
un arbre (112, 212, 312, 412, 512, 612, 712, 812, 912) s'étendant le long d'un axe x ;
un ensemble de roulement (120, 220, 320, 420, 520, 620, 720, 820, 920) accouplant l'arbre au boîtier d'ensemble de rotor, l'ensemble de roulement comprenant un logement de roulement (122), un premier chemin de roulement (130) défini dans le logement de roulement, un deuxième chemin de roulement (126, 226, 326, 426, 526, 626, 726, 826, 926) défini dans l'arbre et une pluralité de roulements à billes (128) positionnés à l'intérieur des premier et deuxième chemins de roulement pour permettre à l'arbre de tourner par rapport au boîtier d'ensemble de rotor, l'arbre comprenant des première (116) et deuxième (118) extrémités ; et
une structure de masse (140, 240, 340, 440, 540, 640, 740, 840, 940) accouplée à l'arbre à proximité des première et deuxième extrémités et pouvant tourner avec l'arbre ; **caractérisé en ce que** le deuxième chemin de roulement fait partie intégrante de l'arbre et est usiné dans ce dernier.

2. Gyrodyne (106, 406, 606, 706, 806, 906) selon la revendication 1, dans lequel l'arbre (112, 412, 612, 712, 812, 912) est au moins partiellement creux.

3. Gyrodyne (206, 306, 506) selon la revendication 1, dans lequel l'arbre (212, 312, 512) a une première partie, une deuxième partie et une troisième partie, la troisième partie (250, 350, 525) étant plus étroite que les première et deuxième parties et étant située entre ces dernières.

4. Gyrodyne (406) selon la revendication 1, dans lequel l'arbre (412) comprend des première et deuxième parties (413, 415) séparées l'une de l'autre.

5. Gyrodyne (106, 206, 306, 406, 506, 606, 706, 806, 906) selon la revendication 1, dans lequel la structure de masse (140, 240, 340, 440, 540, 640, 740, 840, 940) comprend une masse (110) et une première enveloppe (138, 738, 838, 938) qui accouple la masse (110) à l'arbre (112, 212, 312, 412, 512, 612, 712, 812, 912).

6. Gyrodyne (106, 206, 306, 406, 506, 606) selon la revendication 5, dans lequel la première enveloppe (138) est une enveloppe extérieure et la structure de masse (140, 240, 340, 440, 540, 640) comprend en outre une enveloppe intérieure (136, 236).

7. Gyrodyne (106, 206, 306, 406, 506, 606, 706) selon la revendication 5, dans lequel la première enveloppe (138, 738) a des parois incurvées.

8. Gyrodyne selon la revendication 1, dans lequel le deuxième chemin de roulement est la partie la plus mince de l'arbre.
